# FASCICULE DE BREVET EUROPEEN

(11) **EP 3 987 383 B1**
(45) Date de publication et mention de la délivrance du brevet: **20.12.2023**
(21) Numéro de dépôt: 20747029.5
(22) Date de dépôt: 24.06.2020
(51) Int. Cl.: G06F 3/01, B06B 1/04, B60K 35/00

(54) **BOÎTIER D'ACTIONNEMENT POUR FOURNIR UN RETOUR HAPTIQUE DANS UN VÉHICULE**
AKTORGEHÄUSE ZUR HAPTISCHEN RÜCKMELDUNG IN EINEM FAHRZEUG
ACTUATOR HOUSING FOR PROVIDING HAPTIC FEEDBACK IN A VEHICLE

(30) Priorité: 24.06.2019 FR 1906787
(43) Date de publication de la demande: 27.04.2022
(73) Titulaire: NOVARES France, 78140 Vélizy-Villacoublay (FR); Actronika, 75017 Paris (FR)
(72) Inventeur: SOICHEZ, Cyril, 06190 ROQUEBRUNE-CAP-MARTIN (FR); BACELOS, François, 06300 NICE (FR); COMOT, Pierre, 75019 PARIS (FR); HAYWARD, Vincent, 75013 PARIS (FR)
(74) Mandataire: Germain Maureau
(86) Numéro de dépôt international: PCT/FR2020/051096
(87) Numéro de publication internationale: WO 2020/260819

(56) Documents cités:
- EP-A1- 2 180 396
- WO-A1-2019/008021
- DE-A1-102015 008 573
- US-A1- 2017 120 297

## Description

La présente invention se rapporte au domaine des retours haptiques dans un habitacle de véhicule, comme par exemple un véhicule automobile. Elle concerne notamment un boîtier d'actionnement et un module actionneur pour retour haptique. Les véhicules actuels présentent de plus en plus de fonctions à retour haptique accessibles au conducteur et aux passagers depuis différentes localisations dans l'habitacle. Toutefois, les modules haptiques intégrés dans l'habitacle sont tous conçus et conformés à ce jour pour une intégration dédiée à chacune des différentes pièces d'habillage concernées. De ce fait, les actionneurs présentent des tailles et des puissances variées pour être adaptées aux dimensions, surfaces et poids des pièces devant fournir un retour haptique à l'utilisateur dans un même véhicule. Les dimensions et conformation des éléments permettant de transformer le mouvement oscillatoire des actionneurs en vibration haptique sont ainsi tous dédiés aux actionneurs et donc aux pièces d'habillage. Chacun des documents EP2180396 A1 DE102015008573 A1 décrit un boîter d'actionnement destiné à fournir un retour haptique dans un véhicule, mais offrant des possibilités limitées de standardisation des éléments à retour haptique.

L'un des buts de l'invention est de pallier au moins un de ces inconvénients. A cet effet, la présente invention propose un boîtier d'actionnement destiné à fournir un retour haptique dans un véhicule, le boîtier d'actionnement comportant :
- un conteneur comprenant un logement configuré pour loger un actionneur oscillant et une ouverture d'insertion débouchant dans le logement,
- un couvercle configuré pour obturer au moins partiellement l'ouverture d'insertion du conteneur, le conteneur et le couvercle étant montés mobiles en translation l'un par rapport à l'autre et configurés de telle sorte que, lorsque l'actionneur oscillant est logé dans le logement, une oscillation dudit actionneur oscillant engendre un mouvement de translation relatif du couvercle vis-à-vis du conteneur, générant une vibration haptique selon une direction de déplacement Dx.

Ainsi, la présente invention propose un boîtier d'actionnement permettant de loger un actionneur oscillant et de fournir un retour haptique qui n'est pas dédié à la pièce d'habillage à laquelle il sera intégré. Ceci permet une standardisation des éléments à vibration haptique, permettant une intégration facilitée dans l'habitacle. En effet, les vibrations haptiques étant générées par le boîtier, il suffit de le fixer à une pièce d'habillage pour que celle-ci soit apte à fournir ledit retour haptique. Selon la surface ou le poids de la pièce d'habillage, plusieurs boîtiers d'actionnement peuvent être fixés régulièrement sur la surface interne de la pièce de sorte à fournir un retour haptique souhaité uniforme sur la totalité de la pièce. Ceci permet une production de masse d'un unique boîtier, à plus faible coût. Ceci permet également de limiter le réglage des paramètres de l'actionneur par comparaison à la méthode d'intégration généralement utilisée qui nécessite le réglagle des paramètres pour chacun des actionneurs dédiés et disposés dans l'habitacle.

Par l'expression « direction de déplacement Dx », on entend dans le document, un déplacement dans les deux sens possibles suivant la direction Dx.

Lorsque l'actionneur oscillant est logé dans le logement, une oscillation dudit actionneur oscillant engendre un mouvement de translation relatif du couvercle vis-à-vis du conteneur, générant une vibration haptique selon une unique direction de déplacement Dx, dans les deux sens possibles suivant la direction Dx..

Avantageusement, le logement est dédié à un unique actionneur oscillant. Autrement dit, le logement est configuré pour uniquement loger un actionneur. Il n'a pas la possibilité ni l'espace pour loger ou recevoir d'autres fonctions pouvant être prévue dans le boîtier d'actionnement.

Selon une disposition, le couvercle comprend un premier organe élastique configuré pour venir en appui contre une première paroi latérale du conteneur et un deuxième organe élastique configuré pour venir en appui contre une deuxième paroi latérale du conteneur disposée du côté opposé à la première paroi latérale, pour autoriser le mouvement de translation relatif du couvercle vis-à-vis du conteneur suivant la direction de déplacement Dx. Ainsi, ces organes élastiques permettent de transformer les mouvements oscillants de l'actionneur en vibrations haptiques.

Selon une possibilité, la première paroi latérale et la deuxième paroi latérale délimitent au moins partiellement le logement prévu dans le conteneur.

Selon un mode de réalisation, chacun du premier organe élastique et du deuxième organe élastique comprend une languette élastiquement déformable dans la direction de déplacement Dx.

Selon une alternative, le conteneur comprend des moyens élastiques, tels que des languettes élastiquement déformables dans la direction de déplacement Dx, configurés pour autoriser le mouvement de translation relatif du couvercle vis-à-vis du conteneur suivant la direction de déplacement Dx.

Selon une dipsosition particulière, le couvercle comprend un premier moyen de fixation configuré pour coopérer avec un deuxième moyen de fixation complémentaire prévu sur le conteneur, le premier moyen de fixation et le deuxième moyen de fixation complémentaire étant configurés pour maintenir le couvercle sur le conteneur dans une direction perpendiculaire Dz suivant la hauteur du logement, perpendiculairement à un plan d'extension du couvercle et de manière à autoriser le mouvement de translation relatif du couvercle vis à vis du conteneur dans la direction de déplacement Dx. Ceci pemet avantageusement d'interdire la fourniture des vibrations haptiques dans la direction perpendiculaire Dz. Ceci limite également l'encombrement du boîtier d'actionnement.

Selon une possibilité, le premier moyen de fixation comprend des pattes de fixation et le deuxième moyen de fixation complémentaire comprend des ouvertures traversantes ménagées dans une troisième paroi latérale et une quatrième paroi latérale du conteneur opposée à la troisième paroi latérale, les pattes de fixation et les ouvertures traversantes étant configurées pour permettre un clippage entre le couvercle et le conteneur et pour maintenir le couvercle sur le conteneur dans la direction perpendiculaire Dz.

Avantagement, les pattes de fixation comportent une dimension transversale inférieure à la dimension transversale des ouvertures traversantes. Ainsi des moyens simples à mettre en oeuvre garantissent ledit mouvement de translation relatif du couvercle vis à vis du conteneur dans la direction de déplacement Dx.

Selon une possibilité, le couvercle comprend des zones de dégagement de part et d'autre des pattes de sorte à limiter les frottements lors du mouvement de translation relatif du couvercle.

Avantageusement, le couvercle comprend des éléments de guidage configurés pour coopérer avec les faces externes d'une troisième paroi latérale et d'une quatrième paroi latérale du conteneur s'étendant selon une direction transversale Dy s'étendant sensiblement dans un plan d'extension du couvercle et perpendiculairement à la direction de déplacement Dx, de sorte à assurer un guidage du mouvement de translation relatif du couvercle vis-à-vis du conteneur selon la direction du déplacement Dx.

Du fait de la coopération particulière du couvercle sur le conteneur, la vibration haptique est contenue principalement dans une seule direction, quel que soit le type d'actionneur oscillant utilisé. Il est ainsi possible d'utiliser un actionneur multidirectionnel tout en ayant un retour haptique dans une direction optimale, en relation avec la direction de déplacement Dx (dans les deux sens de la direction Dx)

Selon une possibilité, la troisième paroi latérale et la quatrième paroi latérale du conteneur sont perpendiculaires aux première et deuxième parois latérales du conteneur.

Selon l'invention, le logement comprend une première zone d'appui et une deuxième zone d'appui décalées dans une direction perpendiculaire Dz s'étendant selon la hauteur du logement et sensiblement perpendiculairement à un plan d'extension du couvercle, la première zone d'appui et la deuxième zone d'appui étant configurées pour recevoir en appui respectivement une partie mobile et une partie fixe d'un actionneur oscillant de manière décalées dans la direction perpendiculaire Dz, de sorte à former un entrefer d'une épaisseur prédéterminée entre la partie fixe et la partie mobile. Cette configuration permet de garantir la présence d'un entrefer d'une dimension déterminée notamment utile pour un actionneur oscillant comprenant un couple formé de bobines et d'aimants ou d'électroaimants, les bobines et aimants pouvant être indifféremment fixés sur le couvercle ou sur le conteneur. Cette configuration permettant l'obtention d'un entrefer d'une dimension fixée, les paramètres de l'actionneur, et le choix de l'intensité du courant sont réglés une seule fois pour tous les boîtiers d'actionnement ainsi standardisés.

Avantageusement, les dimensions du conteneur et du couvercle du boîtier d'actionnement et le positionnement de la première zone d'appui et de la deuxième zone d'appui sont configurés selon l'épaisseur de la partie mobile et de la partie fixe de l'actionneur oscillant de sorte à générer un espace interstitiel délimitant un entrefer présentant une épaisseur de préférence inférieure à environ 0.5 mm +/- 0.1 mm.

Selon une disposition, le conteneur comprend un logement configuré pour loger un unique actionneur oscillant. La formation d'un entrefer d'une épaisseur prédéterminée entre la partie fixe et la partie mobile de l'unique actionneur est ainsi plus aisée à obtenir.

Avantageusement, le couvercle et/ou le conteneur comprend des premiers éléments de fixation configurés pour fixer le boîtier d'actionnement à une carcasse du véhicule et des deuxièmes éléments de fixation configurés pour fixer le boîtier d'actionnement à une pièce d'habillage de l'habitacle du véhicule.

Ainsi, l'actionneur oscillant qui génère un mouvement de translation relatif du couvercle vis-à-vis du conteneur de type vibrations haptiques, génère également un mouvement de translation relatif de la pièce de l'habillage vis à vis de la carcasse dans la direction de déplacement Dx fournissant un retour haptique à un utilisateur.

Selon une possibilité, le conteneur et le couvercle comprennent chacun une pièce venant de matière plastique moulée. Ainsi, le boîtier d'actionnement peut être produit à grande échelle tout en conservant un même entrefer pour chacun des actionneurs. Le champ magnétique et le retour oscillant étant directement liés à l'épaisseur de l'entrefer, une fois le réglage optimal des paramètres trouvé, il est reproduit de la même façon pour chacun des boîtiers d'actionnements dans un véhicule. Ceci procure une facilité de mise en oeuvre amélioré vis à vis d'autres situations dans lesquelles le véhicule comprend différents boîtiers d'actionnements, chacun dédié à un actionneur qui est lui-même dimensionné selon la pièce d'habillage.

Selon un autre aspect, la présente invention propose un module actionneur à retour haptique destiné à une intégration dans un habitacle d'un véhicule, le module actionneur à retour haptique comprenant :
- un boîtier d'actionnement tel que précédemment décrit
- un actionneur oscillant logé dans le logement, de sorte à générer une vibration haptique selon une direction de déplacement Dx.

Selon une possibilité, le module actionneur comprend une pièce d'habillage de l'habitacle du véhicule, et l'un parmi le conteneur ou le couvercle du boîtier d'actionnement forme partie intégrante de la pièce d'habillage, l'autre du conteneur ou du couvercle est destiné à être fixé à un support d'une carcasse du véhicule.

Cette configuration permet d'améliorer la compacité du module actionneur, le conteneur ou le couvercle conserve son caractère standard.

Selon une possibilité, l'actionneur oscillant comporte :
- une partie mobile tel qu'un réseau d'aimants fixé au couvercle, et
- une partie fixe tel qu'un réseau de bobines, par exemple, fixé ou imprimé sur le conteneur, le conteneur formant partie intégrante de la face arrière de la pièce d'habillage et le couvercle étant destiné à être fixé au support de la carcasse du véhicule.

Selon une autre possibilité, l'actionneur oscillant est un actionneur à moteur rotatif dont la partie mobile est fixée au couvercle.

Selon une variante de réalisation, le conteneur fait partie intégrante de la face arrière de la pièce d'habillage et le couvercle est destiné à être fixé au support de la carcasse du véhicule.

Selon une autre possibilité, le module actionneur comprend un capteur de contact configuré pour détecter un doigt d'un utilisateur sur la face avant de la pièce d'habillage. Le capteur de contact communique à une unité de commande la détection du contact d'un doigt d'un utilisateur qui fournit une alimentation électrique en retour à l'actionneur oscillant pour l'émission d'un retour haptique par la pièce d'habillage.

Le module actionneur comprend avantageusement l'unité de commande configurée pour communiquer avec le capteur de contact et l'actionneur oscillant.

D'autres aspects, buts et avantages de la présente invention apparaîtront mieux à la lecture de la description suivante d'un mode de réalisation de celle-ci, donnée à titre d'exemple non limitatif et faite en référence aux dessins annexés. Les figures ne respectent pas nécessairement l'échelle de tous les éléments représentés de sorte à améliorer leur lisibilité et sur lesquelles on peut voir :
[Fig. 1] une vue en éclaté du boîtier d'actionnement selon un mode de réalisation de l'invention,
[Fig. 2] une vue schématique du couvercle du boîtier d'actionnement selon le mode de réalisation illustré à la figure 1,
[Fig. 3] une vue schématique du conteneur du boîtier d'actionnement selon le mode de réalisation illustré à la figure 1,
[Fig. 4] une vue en coupe transversale du boîtier d'actionnement intégré à une pièce d'habillage d'un habitacle d'un véhicule selon le mode de réalisation de l'invention illustré à la figure 1,
[Fig. 5] une vue en coupe transversale du boîtier d'actionnement intégré à une pièce d'habillage d'un habitacle d'un véhicule selon le mode de réalisation de l'invention illustré à la figure 1,
[Fig. 6] une vue du boîtier d'actionnement fixé sur une face arrière d'une pièce d'habillage d'un habitacle d'un véhicule selon un mode de réalisation de l'invention,
[Fig. 7] une vue d'une face avant d'une pièce d'habillage d'un habitacle d'un véhicule,
[Fig. 8] une vue du module actionneur selon un mode de réalisation de l'invention.

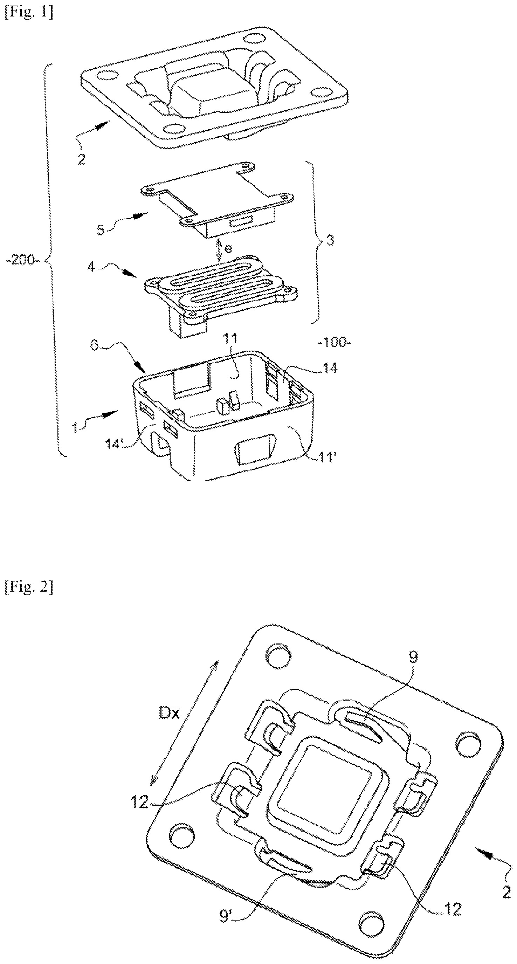

Comme illustré à la figure 1, le boîtier d'actionnement 100 selon la présente invention comprend un conteneur 1 délimitant un logement 6 se terminant par une ouverture d'insertion, un couvercle 2 configuré pour obturer au moins partiellement l'ouverture d'insertion et un actionneur oscillant logé dans le logement. Le couvercle 2 et le conteneur 1 sont montés mobiles en translation l'un par rapport à l'autre selon une direction de déplacement Dx.

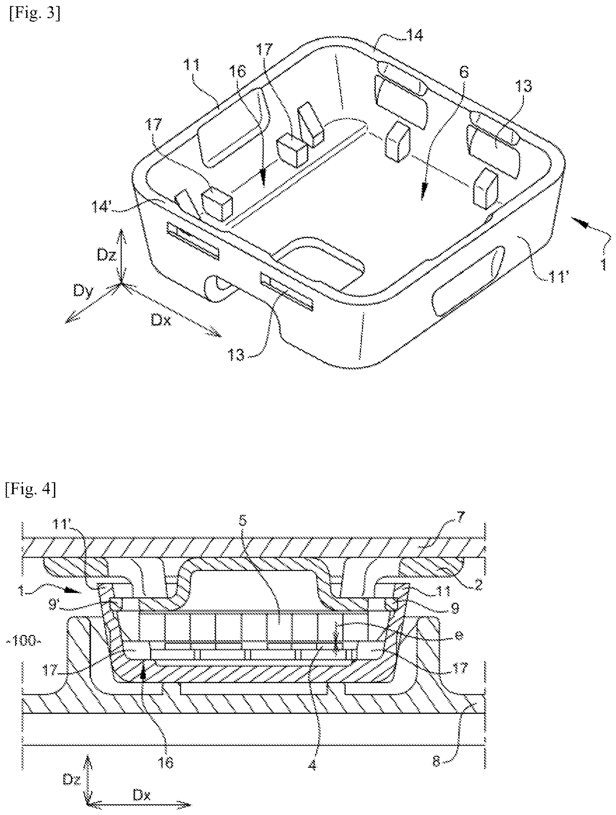

Dans le mode de réalisation illustré sur la figure 1, l'actionneur 3 oscillant est un actionneur 3 de type vibrant composé d'une partie fixe 4, ici un réseau de bobines fixé dans le logement 6, et d'une partie mobile 5, ici un réseau d'aimants fixé sur la face interne du couvercle 2, faisant face au logement 6. Le couvercle 2 et le conteneur 1 sont fixés l'un à l'autre de sorte à permettre un mouvement de translation relatif du couvercle 2 vis-à-vis du conteneur. Ainsi, lors du fonctionnement de l'actionneur 3, le réseau de bobines 4 est alimenté en courant électrique et génère un champ magnétique qui se traduit par un mouvement translatif du réseau d'aimants 5. Le réseau d'aimants 5 étant fixé au couvercle 2, ce dernier s'anime d'un mouvement de translation relatif vis-à-vis du conteneur 1 générant une vibration haptique. Cette vibration haptique est directement transmise à une pièce d'habillage 7 de l'habitacle, fixée au boîtier 100. Selon l'exemple de réalisation illustré à la figure 4, le couvercle 2 est fixé à la pièce d'habillage 7 de l'habitacle et le conteneur 1 est fixé à un support de la carcasse 8 du véhicule. Ainsi, les vibrations haptiques sont transmises à l'utilisateur via la pièce d'habillage 7 de l'habitacle.

Comme visible aux figures 2 et 4, le couvercle 2 comprend un premier organe élastique 9 configuré pour venir en appui contre une première paroi latérale 11 du conteneur 1 et un deuxième organe élastique 9' configuré pour venir en appui contre une deuxième paroi latérale 11' du conteneur 1 disposée du côté opposé à la première paroi latérale 11. Dans le mode de réalisation illustré sur les figures, ces organes élastiques comprennent des languettes élastiquement déformables dans la direction de déplacement Dx et autorisent le mouvement de translation relatif du couvercle 2 vis-à-vis du conteneur 1. Selon une variante non illustrée, le couvercle comprend des moyens élastiques tel que des languettes élastiquement déformables selon le direction Dx de sorte à autoriser le mouvement de translation relatif.

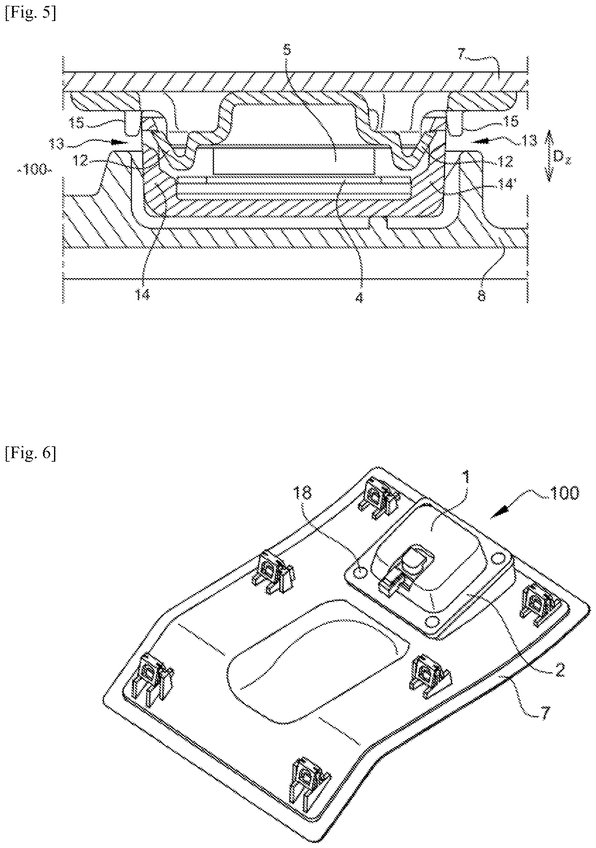

Egalement visibles aux figures 3 et 5, le couvercle 2 comprend un premier moyen de fixation configuré pour coopérer avec un deuxième moyen de fixation complémentaire prévu sur le conteneur 1, telle que respectivement des pattes de fixation 12 et des ouvertures traversantes 13 correspondantes, permettant de maintenir le couvercle 2 sur le conteneur 1 dans une direction perpendiculaire Dz s'étendant selon la hauteur du logement 6 et sensiblement perpendiculairement à un plan d'extension du couvercle 2, tout en autorisant le mouvement de translation relatif du couvercle 2 vis à vis du conteneur 1 dans la direction de déplacement Dx. Les ouvertures traversantes 13 sont ménagées dans une troisième paroi latérale du conteneur 1 et dans une quatrième paroi latérale opposée à la troisième paroi latérale 14 en s'étendant selon une direction transversale Dy s'étendant dans un plan d'extension du couvercle 2, sensiblement perpendiculairement à la direction de déplacement Dx. Les pattes de fixation 12 sont disposées sur le couvercle 2 de sorte à pouvoir être clippée dans les ouvertures traversantes 13 correspondantes. Afin de pouvoir autoriser le mouvement de translation selon la direction de déplacement Dx, les pattes de fixation 12 du couvercle 2 comportent une dimension transversale inférieure à la dimension transversale des ouvertures traversantes 13 du conteneur 1.

Comme illustré à la figure 5, le couvercle 2 comprend des éléments de guidage 15, tels que des plots, configurés pour coopérer avec les faces externes de la troisième paroi latérale 14 et de la quatrième paroi latérale 14' du conteneur 1, de sorte à assurer un guidage du mouvement de translation relatif du couvercle 2 vis-à-vis du conteneur 1 selon la direction du déplacement Dx. Ces éléments de guidage 15 permettent ainsi d'interdire un déplacement relatif du couvercle 2 vis-à-vis du conteneur 1 dans une direction transversale Dy perpendiculairement à la direction de déplacement Dx de sorte que le boîtier d'actionnement 100 contraint le mouvement oscillant d'un actionneur 3 oscillant dans une seule direction de déplacement Dx.

Illustré aux figures 1 et 3, le logement 6 du conteneur 1 présente une section longitudinale globalement rectangle. Les première et deuxième parois latérales 11, 11' et les troisième et quatrième parois latérales 14, 14' délimitant le logement 6 sont parallèles deux à deux. Ainsi, les éléments de guidage 15, l'orientation des parois latérales 11, 14, les pattes de fixation 12 et les ouvertures transversantes 13 assurent un glissement selon la direction de déplacement Dx du couvercle 2 vis-à-vis du conteneur 1.

Egalement illustré sur les figures 3 à 5, le logement 6 comprend une première zone d'appui 16 destinée à la mise en appui du réseau de bobines 4 de l'actionneur 3. Le logement 6 comprend également une deuxième zone d'appui 17 décalée de la première zone d'appui 16 dans la direction perpendiculaire Dz et configurée pour recevoir en appui la partie mobile 5 de l'actionneur 3. Cette configuration permet de créer un entrefer e d'une épaisseur déterminée et fixe entre le réseau de bobines 4 et le réseau d'aimants 5. L'épaisseur de l'entrefer e étant fixée, la vibration haptique générée dans le boîtier d'actionnement 100 est standardisée et le calibrage pour un retour haptique souhaité est facilité. Selon un mode de réalisation non illustré, le réseau de bobines 4 est fixé sur le couvercle 2 et le réseau d'aimants 5 est fixé sur le conteneur 1 et le mouvement de translation relatif du couvercle 2 vis à vis du conteneur 1 selon la direction de déplacement Dx reste inchangé.

Selon un autre mode de réalisation non illustré, l'actionneur 3 oscillant est choisi parmi des actionneurs 3 générant des oscillations dans de multiples directions, des actionneurs à moteur linéaire à réseau de halbach (décrit par exemple dans le document WO2019/008021) ou des actionneurs 3 à moteur rotatif, des actionneurs 3 à lames, ou des actionneurs 3 de type à bobines et électroaimants.

En effet, le mouvement de translation relatif du conteneur 1 et du couvercle 2 est limité dans la direction perpendiculaire Dz perpendiculaire au plan d'extension du couvercle 2. Ceci permet de restreindre un actionneur 3 oscillant multidirectionnel dans un mouvement dans un plan en interdisant un mouvement du couvercle 2 ou du conteneur 1 dans la direction perpendiculaire Dz. De plus, les éléments de guidage 15 interdisent également un déplacement relatif du couvercle 2 vis-à-vis du conteneur 1 dans une direction transversale Dy perpendiculairement à la direction de déplacement Dx. Ainsi, le boîtier d'actionnement 100 selon l'invention contraint le mouvement oscillant d'un actionneur 3 oscillant dans une seule direction de déplacement Dx permettant un retour haptique optimal.

Dans le cas d'actionneurs 3 à moteurs rotatifs (non illustré), la partie fixe 4 comprenant le moteur est fixée dans le logement 6 et la partie mobile 5 constituée par le bras du moteur est fixée au couvercle 2 et génère les vibrations haptiques.

Lorsque des actionneurs 3 à lames sont utilisés (non illustré), la membrane comprenant les lames est fixée au couvercle 2. La membrane selon l'application d'un courant électrique subit des efforts entraînant une compression ou une détente générant des micro-vibrations.

Les figures 4 à 6 illustrent des premiers éléments de fixation du conteneur 1 à une carcasse 8 d'un véhicule obtenu par clippage, ou un aggrafage rapporté ou bien selon une possibilité non illustrée, par une fixation obtenue par un collage à l'aide d'une mousse adhésive.

Les deuxièmes éléments de fixation 18 du couvercle 2 à une pièce d'habillage de l'habitacle sont des éléments de clippage (visible figure 6 - des ouvertures dans le couvercle 2 sont illustrées figure 2). Selon une variante non illustrée, la fixation est obtenue par soudure ou par bouterollage. Il est entendu dans le présent document que le retour haptique est garanti grâce au jeu intrinsèque existant dans la fixation elle-même de la pièce d'habillage 7 à l'habitacle du véhicule.

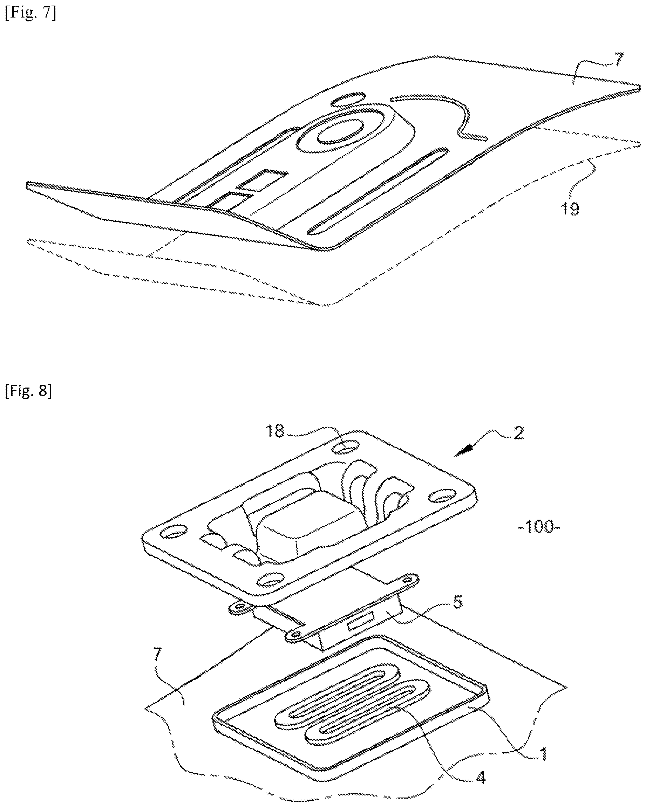

La figure 8 représente un module actionneur 200 selon le deuxième aspect de l'invention. Tel qu'illustré, le module actionneur 200 comprend une pièce d'habillage 7 de l'habitacle, un capteur de contact 19 (non visible) et un boîtier d'actionnement 100 tel que précédemment décrit et dont le conteneur 1 a la particularité de former partie intégrante de la pièce d'habillage 7. Ceci permet de gagner en compacité, en légèreté et également de faciliter l'intégration d'un actionneur 3 à retour haptique dans l'habitacle. Le couvercle 2 du boîtier d'actionnement 100 est monté mobile en translation sur les parois du logement 6 du conteneur 1 permettant un mouvement de translation relatif selon la direction de déplacement Dx vis-à-vis de la pièce d'habillage 7. Le couvercle 2 est par ailleurs fixé à un support de la carcasse 8 du véhicule. Ainsi immobilisé, c'est le conteneur 1 ou la pièce d'habillage 7 qui sera animée d'un mouvement de translation relatif, générant un retour haptique. Un réseau de bobines 4 est imprimé dans le logement 6 en face arrière de la pièce d'habillage 7, et le reseau d'aimants 5 est fixé au couvercle 2. Le capteur de contact 19 est un film capacitif disposé en face arrière de la pièce d'habillage 7, tel qu'illustré à la figure 7 sur lequel est imprimé le réseau de bobines 4. Selon une alternative non illustrée, le capteur de contact 19 est un capteur de pression utilisant une jauge de contrainte. Selon une autre variante non illustré, le réseau de bobines 4 est fixé sur la face arrière de la pièce d'habillage.

Selon une autre variante non illustrée, le couvercle 2 du boîtier d'actionnement 100 forme partie intégrante de la pièce d'habillage 7. Le conteneur 1 est fixé à un support de la carcasse 8 du véhicule. Le montage mobile en translation relative selon la direction de déplacement Dx du conteneur 1 et du couvercle 2 permet un retour haptique par la pièce d'habillage 7.

Ainsi la présente invention propose un boîtier d'actionnement 100 peu coûteux, qui peut être intégré dans tous les véhicules quelle que soient leurs catégories. Une montée en gamme incluant un retour haptique est facilitée car l'encombrement est identique que le boîtier soit vide ou complété avec un actionneur 3. De plus, le boîtier étant standard, les vibrations haptiques obtenues présentent les mêmes caractéristiques de réponse haptique de sorte que le temps nécessaire aux opérations de calibration est réduit et qu'une qualité de réponse haptique spécifique à une gamme de véhicule est aisément paramétrable seulement par un logiciel software pilotant l'actionneur. Il est aussi facile de faire varier la sensilibité du retour haptique obtenu selon les différentes gammes de véhicules dotés de ce boîtier.

Le module actionneur 200 dans lequel le couvercle 2 ou le conteneur 1 forme partie intégrante de la pièce d'habillage 7 est encore plus compact et léger.

Il va de soi que l'invention n'est pas limitée au mode de réalisation décrit ci-dessus à titre d'exemple mais qu'elle comprend tous les équivalents techniques et les variantes des moyens décrits ainsi que leurs combinaisons, l'objet de l'invention n'étant limité que par ce qui est défini dans la revendication 1.

## Revendications

1. Boîtier d'actionnement (100) destiné à fournir un retour haptique dans un véhicule, le boîtier d'actionnement comportant :
- un conteneur (1) comprenant un logement (6) configuré pour loger un actionneur (3) oscillant et une ouverture d'insertion débouchant dans le logement (6),
- un couvercle (2) configuré pour obturer au moins partiellement l'ouverture d'insertion du conteneur (1), le conteneur (1) et le couvercle (2) étant montés mobiles en translation l'un par rapport à l'autre et configurés de telle sorte que, lorsque l'actionneur (3) oscillant est logé dans le logement (6), une oscillation dudit actionneur (3) oscillant engendre un mouvement de translation relatif du couvercle (2) vis-à-vis du conteneur (1), générant une vibration haptique selon une direction de déplacement (DX) dans un plan d'extension du couvercle (2),
**caractérisé en ce que** le logement (6) comprend une première zone d'appui (16) et une deuxième zone d'appui (17) décalées dans une direction perpendiculaire (Dz) s'étendant selon la hauteur du logement (6) et sensiblement perpendiculairement au plan d'extension du couvercle (2), la première zone d'appui (16) et la deuxième zone d'appui (17) étant configurées pour recevoir en appui respectivement une partie mobile (5) et une partie fixe (4) de l'actionneur (3) oscillant de manière décalées dans la direction perpendiculaire (Dz), de sorte à former un entrefer (e) d'une épaisseur prédéterminée entre la partie fixe (4) et la partie mobile (5).

2. Boîtier d'actionnement (100) selon la revendication 1, dans lequel le couvercle (2) comprend un premier organe élastique (9) configuré pour venir en appui contre une première paroi latérale (11) du conteneur (1) et un deuxième organe élastique (9') configuré pour venir en appui contre une deuxième paroi latérale (11') du conteneur (1) disposée du côté opposé à la première paroi latérale (11), pour autoriser le mouvement de translation relatif du couvercle (2) vis-à-vis du conteneur (1) suivant la direction de déplacement (Dx).

3. Boîtier d'actionnement (100) selon la revendication 1, dans lequel le conteneur (1) comprend des moyens élastiques, tels qu'une languette élastiquement déformable dans la direction de déplacement (Dx), configurés pour autoriser le mouvement de translation relatif du couvercle (2) vis-à-vis du conteneur (1) suivant la direction de déplacement (Dx).

4. Boîtier d'actionnement (100) selon la revendication 2, dans lequel chacun du premier organe élastique (9) et du deuxième organe élastique (9') comprend une languette élastiquement déformable dans la direction de déplacement (Dx).

5. Boîtier d'actionnement (100) selon l'une des revendications 1 à 4, dans lequel le couvercle (2) comprend un premier moyen de fixation configuré pour coopérer avec un deuxième moyen de fixation complémentaire prévu sur le conteneur (1), le premier moyen de fixation et le deuxième moyen de fixation complémentaire étant configurés pour maintenir le couvercle (2) sur le conteneur (1) dans une direction perpendiculaire (Dz) suivant la hauteur du logement (6), perpendiculairement à un plan d'extension du couvercle (2) et de manière à autoriser le mouvement de translation relatif du couvercle (2) vis à vis du conteneur (1) dans la direction de déplacement (Dx).

6. Boîtier d'actionnement (100) selon la revendication 5, dans lequel le premier moyen de fixation comprend des pattes de fixation (12) et le deuxième moyen de fixation complémentaire comprend des ouvertures traversantes (13) ménagées dans une troisième paroi latérale (14) et une quatrième paroi latérale (14') du conteneur (1) opposée à la troisième paroi latérale (14), les pattes de fixation (12) et les ouvertures traversantes (13) étant configurées pour permettre un clippage entre le couvercle (2) et le conteneur (1) et pour maintenir le couvercle (2) sur le conteneur (1) dans la direction perpendiculaire (Dz).

7. Boîtier d'actionnement (100) selon l'une des revendications 1 à 6, dans lequel le couvercle (2) comprend des éléments de guidage (15) configurés pour coopérer avec les faces externes d'une troisième paroi latérale (14) et d'une quatrième paroi latérale (14') du conteneur (1) s'étendant selon une direction transversale (Dy) s'étendant dans un plan d'extension du couvercle (2) et perpendiculairement à la direction de déplacement (Dx), de sorte à assurer un guidage du mouvement de translation relatif du couvercle (2) vis-à-vis du conteneur (1) selon la direction du déplacement (Dx).

8. Boîtier d'actionnement (100) selon l'une des revendications 1 à 7, dans lequel le couvercle (2) et/ou le conteneur (1) comprend des premiers éléments de fixation configurés pour fixer le boîtier d'actionnement (100) à une carcasse (8) du véhicule et des deuxièmes éléments de fixation (18) configurés pour fixer le boîtier d'actionnement (100) à une pièce d'habillage (7) de l'habitacle du véhicule.

9. Module actionneur (200) à retour haptique destiné à une intégration dans un habitacle d'un véhicule, le module actionneur (200) à retour haptique comprenant :
un boîtier d'actionnement (100) selon l'une des revendications 1 à 8, et
un actionneur (3) oscillant logé dans le logement (6), de sorte à générer une vibration haptique selon une direction de déplacement (Dx).

10. Module actionneur (200) à retour haptique selon la revendication 9 comprenant une pièce d'habillage (7) de l'habitacle du véhicule, et l'un parmi le conteneur (1) ou le couvercle (2) du boîtier d'actionnement (100) forme partie intégrante de la pièce d'habillage (7), l'autre du conteneur (1) ou du couvercle (2) est destiné à être fixé à un support d'une carcasse (8) du véhicule.

11. Module actionneur (200) à retour haptique selon la revendication 10, dans lequel l'actionneur (3) oscillant comporte :
- une partie mobile (5), tel qu'un réseau d'aimants fixé au couvercle (2), et
- une partie fixe (4), tel qu'un réseau de bobines fixé ou imprimé sur le conteneur (1),
le conteneur (1) formant partie intégrante de la face arrière de la pièce d'habillage (7) et le couvercle (2) étant destiné à être fixé au support de la carcasse (8) du véhicule.

## Patentansprüche

1. Betätigungsgehäuse (100), das dazu bestimmt ist, eine haptische Rückmeldung in einem Fahrzeug zu liefern, wobei das Betätigungsgehäuse Folgendes umfasst:
- einen Behälter (1), der ein Gehäuse (6), das dazu konfiguriert ist, einen oszillierenden Betätiger (3) aufzunehmen, und eine Einführöffnung umfasst, die in das Gehäuse (6) mündet, und
- eine Abdeckung (2), die dazu konfiguriert ist, die Einführöffnung des Behälters (1) mindestens teilweise zu verschließen, wobei der Behälter (1) und die Abdeckung (2) relativ zueinander translatorisch beweglich montiert und derart konfiguriert sind, dass, wenn der oszillierende Betätiger (3) im Gehäuse (6) untergebracht ist, eine Oszillation des oszillierenden Betätigers (3) eine relative translatorische Bewegung der Abdeckung (2) in Bezug auf den Behälter (1) entsteht, wodurch eine haptische Vibration in einer Verschiebungsrichtung (DX) in einer Erstreckungsebene der Abdeckung (2) erzeugt wird,
**dadurch gekennzeichnet, dass** das Gehäuse (6) eine erste Auflagezone (16) und eine zweite Auflagezone (17) umfasst, die in einer senkrechten Richtung (Dz) versetzt sind, sich entlang der Höhe des Gehäuses (6) erstrecken und im Wesentlichen senkrecht zur Erstreckungsebene der Abdeckung (2) verlaufen, wobei die erste Auflagezone (16) und die zweite Auflagezone (17) dazu konfiguriert sind, einen beweglichen Teil (5) und einen festen Teil (4) des Betätigers (3) in der senkrechten Richtung (Dz) versetzt jeweils aufliegend aufzunehmen, um so einen Luftspalt (e) mit einer vorbestimmten Dicke zwischen dem festen Teil (4) und dem beweglichen Teil (5) zu bilden.

2. Betätigungsgehäuse (100) nach Anspruch 1, wobei die Abdeckung (2) ein erstes elastisches Element (9), das dazu konfiguriert ist, an einer ersten Seitenwand (11) des Behälters (1) zum Aufliegen zu kommen, und ein zweites elastisches Element (9') umfasst, das dazu konfiguriert ist, an einer zweiten Seitenwand (11') des Behälters (1), die auf der gegenüberliegenden Seite der ersten Seitenwand (11) angeordnet ist, zum Aufliegen zu kommen, um die relative translatorische Bewegung der Abdeckung (2) in Bezug auf den Behälter (1) in der Verschiebungsrichtung (Dx) zu ermöglichen.

3. Betätigungsgehäuse (100) nach Anspruch 1, wobei der Behälter (1) elastische Mittel umfasst, beispielsweise eine in der Verschiebungsrichtung (Dx) elastisch verformbare Lasche, die dazu konfiguriert ist, die relative translatorische Bewegung der Abdeckung (2) in Bezug auf den Behälter (1) in der Verschiebungsrichtung (Dx) zu ermöglichen.

4. Betätigungsgehäuse (100) nach Anspruch 2, wobei jeweils das erste elastische Element (9) und das zweite elastische Element (9') eine in der Verschiebungsrichtung (Dx) elastisch verformbare Lasche umfassen.

5. Betätigungsgehäuse (100) nach einem der Ansprüche 1 bis 4, wobei die Abdeckung (2) ein erstes Befestigungsmittel umfasst, das dazu konfiguriert ist, mit einem zweiten komplementären Befestigungsmittel zusammenzuwirken, das am Behälter (1) vorgesehen ist, wobei das erste Befestigungsmittel und das zweite Befestigungsmittel dazu konfiguriert sind, die Abdeckung (2) am Behälter (1) in einer senkrechten Richtung (Dz) entlang der Höhe des Gehäuses (6), senkrecht zu einer Erstreckungsebene der Abdeckung (2) und derart zu halten, dass die relative translatorische Bewegung der Abdeckung (2) in Bezug auf den Behälter (1) in der Verschiebungsrichtung (Dx) ermöglicht wird.

6. Betätigungsgehäuse (100) nach Anspruch 5, wobei das erste Befestigungsmittel Befestigungsklammern (12) umfasst und das zweite komplementäre Befestigungsmittel Durchgangsöffnungen (13) umfasst, die in einer dritten Seitenwand (14) und einer vierten Seitenwand (14') des Behälters (1), die der dritten Seitenwand (14) gegenüberliegt, vorgesehen sind, wobei die Befestigungsklammern (12) und die Durchgangsöffnungen (13) dazu konfiguriert sind, ein Einrasten zwischen der Abdeckung (2) und dem Behälter (1) zu gestatten und die Abdeckung (2) in der senkrechten Richtung (Dz) auf dem Behälter (1) zu halten.

7. Betätigungsgehäuse (100) nach einem der Ansprüche 1 bis 6, wobei die Abdeckung (2) Führungselemente (15) umfasst, die dazu konfiguriert sind, mit den Außenflächen einer dritten Seitenwand (14) und einer vierten Seitenwand (14') des Behälters (1) zusammenzuwirken, die sich in einer Querrichtung (Dy) erstrecken, die sich in einer Erstreckungsebene der Abdeckung (2) und senkrecht zur Verschiebungsrichtung (Dx) erstreckt, um so eine Führung der relativen translatorischen Bewegung der Abdeckung (2) in Bezug auf den Behälter (1) in der Verschiebungsrichtung (Dx) zu gewährleisten.

8. Betätigungsgehäuse (100) nach einem der Ansprüche 1 bis 7, wobei die Abdeckung (2) und/oder der Behälter (1) erste Befestigungselemente, die dazu konfiguriert sind, das Betätigungsgehäuse (100) an einer Karosserie (8) des Fahrzeugs zu befestigen, und zweite Befestigungselemente (18) umfasst, die dazu konfiguriert sind, das Betätigungsgehäuse (100) an einem Verkleidungsteil (7) des Fahrzeuginnenraums zu befestigen.

9. Betätigermodul (200) mit haptischer Rückmeldung, das für eine Integration in einen Innenraum eines Fahrzeugs bestimmt ist, wobei das Betätigermodul (200) mit haptischer Rückmeldung Folgendes umfasst:
ein Betätigungsgehäuse (100) nach einem der Ansprüche 1 bis 8, und
ein oszillierender Betätiger (3), der im Gehäuse (6) untergebracht ist, um so eine haptische Vibration in einer Verschiebungsrichtung (Dx) zu erzeugen.

10. Betätigermodul (200) mit haptischer Rückmeldung nach Anspruch 9, umfassend ein Verkleidungsteil (7) des Innenraums des Fahrzeugs umfasst und wobei eines von dem Behälter (1) oder der Abdeckung (2) des Betätigungsgehäuses (100) einen integralen Bestandteil des Verkleidungsteils (7) bildet, das andere von dem Behälter (1) oder der Abdeckung (2) dazu bestimmt ist, an einem Träger einer Karosserie (8) des Fahrzeugs befestigt zu werden.

11. Betätigermodul (200) mit haptischer Rückmeldung nach Anspruch 10, wobei der oszillierende Betätiger (3) Folgendes umfasst:
- ein bewegliches Teil (5), beispielsweise eine Anordnung von Magneten, die an der Abdeckung (2) befestigt sind, und
- ein festes Teil (4), beispielsweise eine Anordnung von Spulen, die am Behälter (1) befestigt oder aufgedruckt sind,
wobei der Behälter (1) einen integralen Bestandteil der Rückseite des Verkleidungsteils (7) bildet und die Abdeckung (2) dazu bestimmt ist, am Träger der Karosserie (8) des Fahrzeugs befestigt zu werden.

## Claims

1. An actuation casing (100) intended to provide a haptic feedback in a vehicle, the actuation casing including:
- a container (1) comprising a housing (6) configured to house an oscillating actuator (3) and an insertion opening emerging into the housing (6),
- a cover (2) configured to at least partially close the insertion opening of the container (1), the container (1) and the cover (2) being movably mounted in translation relative to each other and configured such that, when the oscillating actuator (3) is housed in the housing (6), an oscillation of said oscillating actuator (3) generates a relative translational movement of the cover (2) vis-à-vis the container (1), generating a haptic vibration in a displacement direction (DX) in an extension plane of the cover (2), **characterized in that** the housing (6) comprises a first bearing zone (16) and a second bearing zone (17) offset in a perpendicular direction (Dz) extending along the height of the housing (6) and substantially perpendicular to an extension plane of the cover (2), the first bearing zone (16) and the second bearing zone (17) being configured to respectively receive as a bearing a movable part (5) and a fixed part (4) of an actuator (3) oscillating in an offset manner in the perpendicular direction (Dz), so as to form an air gap (e) of a predetermined thickness between the fixed part (4) and the movable part (5).

2. The actuation casing (100) according to claim 1, wherein the cover (2) comprises a first elastic member (9) configured to bear against a first lateral wall (11) of the container (1) and a second elastic member (9') configured to bear against a second lateral wall (11') of the container (1) arranged on the side opposite to the first lateral wall (11), to allow the relative translational movement of the cover (2) vis-à-vis the container (1) in the displacement direction (Dx).

3. The actuation casing (100) according to claim 1, wherein the container (1) comprises elastic means, such as a tab elastically deformable in the displacement direction (Dx), configured to authorize the relative translational movement of the cover (2) vis-à-vis the container (1) in the displacement direction (Dx).

4. The actuation casing (100) according to claim 2, wherein each of the first elastic member (9) and of the second elastic member (9') comprises a tab elastically deformable in the displacement direction (Dx).

5. The actuation casing (100) according to any of claims 1 to 4 wherein the cover (2) comprises a first fixing means configured to cooperate with a second complementary fixing means provided on the container (1), the first fixing means and the second complementary fixing means being configured to hold the cover (2) on the container (1) in a perpendicular direction (Dz) along the height of the housing (6), perpendicular to a plane of extension of the cover (2) and so as to allow the relative translational movement of the cover (2) vis-à-vis the container (1) in the displacement direction (Dx).

6. The actuation casing (100) according to claim 5, wherein the first fixing means comprises fixing legs (12) and the second complementary fixing means comprises through openings (13) formed in a third lateral wall (14) and a fourth lateral wall (14') of the container (1) opposite the third lateral wall (14), the fixing legs (12) and the through openings (13) being configured to allow a clipping between the cover (2) and the container (1) and to hold the cover (2) on the container (1) in the perpendicular direction (Dz).

7. The actuation casing (100) according to any of claims 1 to 6, wherein the cover (2) comprises guide elements (15) configured to cooperate with the outer faces of a third lateral wall (14) and a fourth lateral wall (14') of the container (1) extending in a transverse direction (Dy) extending in an extension plane of the cover (2) and perpendicular to the displacement direction (Dx), so as to ensure a guiding of the relative translational movement of the cover (2) vis-à-vis the container (1) in the displacement direction (Dx).

8. The actuation casing (100) according to any of claims 1 to 7, wherein the cover (2) and/or the container (1) comprises first fixing elements configured to fix the actuation casing (100) to a body (8) of the vehicle and second fixing elements (18) configured to fix the actuation casing (100) to a trim part (7) of the vehicle passenger compartment.

9. An actuator module (200) with haptic feedback intended for an integration into a vehicle passenger compartment, the actuator module (200) with haptic feedback comprising:
an actuation casing (100) according to any of claims 1 to 8, and
an oscillating actuator (3) housed in the housing (6), so as to generate a haptic vibration in a displacement direction (Dx).

10. The actuator module (200) with haptic feedback according to claim 9 comprising a trim part (7) of the vehicle passenger compartment, and one of the container (1) or the cover (2) of the actuation casing (100) forms an integral part of the trim part (7), the other of the container (1) or the cover (2) is intended to be fixed to a support of a body (8) of the vehicle.

11. The actuator module (200) with haptic feedback according to claim 10, wherein the oscillating actuator (3) includes:
- a movable part (5), such as an array of magnets fixed to the cover (2), and
- a fixed part (4), such as an array of coils fixed or printed on the container (1),
the container (1) forming an integral part of the rear face of the trim part (7) and the cover (2) being intended to be fixed to the support of the body (8) of the vehicle.
